## Europäisches Patentamt

## European Patent Office

## Office européen des brevets

(19)

(11) Veröffentlichungsnummer: **0 138 868**
**B1**

(12)

# EUROPÄISCHE PATENTSCHRIFT

(45) Veröffentlichungstag der Patentschrift:
16.07.86

(21) Anmeldenummer: 84901057.4

(22) Anmeldetag: 22.03.84

(86) Internationale Anmeldenummer:
PCT/CH 84/00049

(87) Internationale Veröffentlichungsnummer:
WO 84/03874 (11.10.84 Gazette 84/24)

(51) Int. Cl.⁴: **B 65 D 71/00**, B 65 D 69/00

(54) FLÄCHIGE KLEINTEILE IN GESTAPELTER FORM.

(30) Priorität: 30.03.83 CH 1772/83

(43) Veröffentlichungstag der Anmeldung:
02.05.85 Patentblatt 85/18

(45) Bekanntmachung des Hinweises auf die Patenterteilung:
16.07.86 Patentblatt 86/29

(84) Benannte Vertragsstaaten:
AT BE CH DE FR GB LI LU NL SE

(56) Entgegenhaltungen:
EP - A - 0 104 816
DE - A - 2 043 344
US - A - 1 979 049
US - A - 2 939 147
US - A - 3 021 947
US - A - 3 550 768
US - A - 4 305 503

(73) Patentinhaber: LENZ APPARATEBAU AG,
Flawilerstrasse 12, CH-9203 Niederwil (CH)

(72) Erfinder: LENZ, Alex, Flawilerstrasse 12,
CH-9203 Niederwil (CH)

(74) Vertreter: Feldmann, Clarence Paul et al, c/o
Patentanwaltsbüro FELDMANN AG Postfach
Kanalstrasse 17, CH-8152 Glattbrugg (CH)

ACTORUM AG

## Beschreibung

Die vorliegende Erfindung betrifft deckungsgleich gestapelte, flächige Kleinteile, insbesondere zum Magazinieren und zur Verwendung in Geräten und Maschinen mit Einzelabgabe der Kleinteile.

Es besteht der generelle Wunsch, einzelne Kleinteile zu abgezählten Einheiten zusammen zu fassen. Meist erfolgt dies in Form von Verpackungen wie Schrumpf-Folienhüllen oder Schachteln. Sollen aber die Kleinteile später einem Gerät oder einer Maschine zur weiteren Verarbeitung zugeführt werden, müssen diese Einzelteile oft in einer Vibrationsfördermaschine vereinzelt und ausgerichtet und dann einzeln zugeführt werden.

Solche Probleme tauchen fast an allen Montagenstrassen mehrfach auf. Wären die zu verwendenden Kleinteile in gestapelter Form erhältlich, wäre dies bei vielen Anwendungen nützlich.

Eine Lösung, Kleinteile in gestapelter Form anbieten zu können, besteht darin, die Kleinteile in geordneter Form aneinander zu reihen und mit einem Klebstoff, der an den Stirnseiten der gestapelten Teile aufgetragen wird, zu verbinden. Diese Lösung ist beispielsweise von gestapelten Heftklammern her bekannt.

Für flächige Kleinteile, wie Unterlagsscheiben, Dichtringe, Distanzplatten und so weiter kommt diese Art der Stapelung nicht in Frage, da die aufeinander liegenden Teile im Spaltbereich eine Kapillarwirkung ausüben und der Klebstoff zwischen die Einzelteile kriecht. In der Folge lassen sich die Kleinteile kaum noch vereinzeln.

In vielen Fällen ist es auch unerwünscht, dass an den Kleinteilen noch Klebstoff hängt. Ferner wäre es wünschbar, die Kleinteile mit relativ geringem Kraftaufwand vereinzeln zu können. Dabei darf man nicht vergessen, dass in manchen Anwendungen die Einzelteile doch ein relativ hohes Gewicht aufweisen können, welches in der gestapelten Form sich ja noch vervielfacht.

Die vorliegende Erfindung zeigt eine Lösung auf, auch flächige Kleinteile zu stapeln, in dem die Kleinteile mindestens mit einem Durchgangsloch versehen sind, welches mit einem elastischen Verbindungsmaterial mit relativ geringem Scherkraftwiderstand gefüllt ist.

In der beiliegenden Zeichnung sind verschiedene Kleinteile einzeln und in gestapelter Form dargestellt:

Figur 1 zeigt ein ringförmiges Kleinteil,
Figur 2 ein gestanztes Federplättchen, und
Figur 3 eine sogenannte Mine für Polsterarbeiten einzeln, und
Figur 4 in gestapelter Form.

Das Wesen der Erfindung besteht darin, Kleinteile mit mindestens einem Durchgangsloch deckungsgleich übereinander zu stapeln und den oder die so gebildeten Durchgangskanäle bzw. Kanal mit einem relativ elastischen Material mit relativ geringem Scherkraftwiderstand zu füllen.

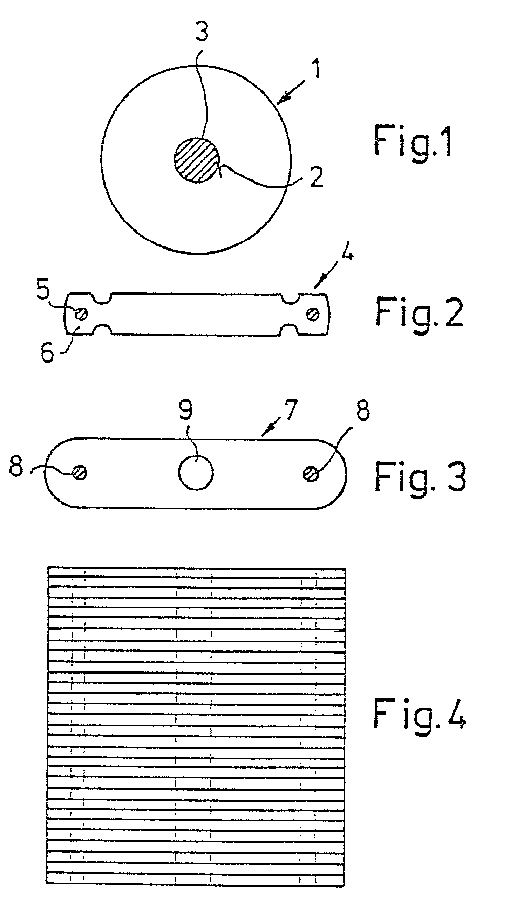

In der Figur 1 ist der zu stapelnde Kleinteil 1 ein ringförmiger Teil, beispielsweise eine Unterlagsscheibe.

Diese weist ein bereits für den späteren effektiven Verwendungszweck erforderliches Durchgangsloch 2 auf. Das Durchgangsloch 2 ist mit einem Kunststoffstäbchen 3 ausgefüllt. Diese einfachste Lösung mit nur einem zentrischen Loch lässt sich nur dann realisieren, wenn die Vereinzelung durch schrittweises Herausziehen des Kunststoffstäbchens im Verarbeitungsprozess möglich ist, oder durch Abscherung mittels eines Stempels, wobei allerdings unter Umständen der im Durchgangsloch verbliebene Teil der Kunststoffstäbchen noch entfernt werden muss.

Der ringförmige Kleinteil 1 kann aber auch zusätzliche Durchgangslöcher mit geringem Durchmesser aufweisen, die mit Kunststoff gefüllt sind. Verbleiben dann Kunststoffteilchen in diesen, von der Funktion her unwesentlichen Löchern hängen, ist dies bedeutungslos.

Diese Lösung ist beispielsweise beim Federplättchen 4 gemäss Figur 2 realisiert. Die lediglich zum Stapeln erforderlichen Hilfs-Durchgangslöcher 5 können ohne Mehrkosten im gleichen Stanzgang, in dem das Plättchen 4 fabriziert wird, erstellt werden.

Dienen die im Befestigungs- oder Auflageteil 6 des Federplättchens 4 angebrachten Durchgangslöcher 5 gleichzeitig als Durchgangslöcher für Befestigungsschrauben, verwendet man als verbindendes Material am besten einen Wachs oder ein wachsartiges Material mit genügender Festigkeit. In diesem Fall dient das in den Löchern verbleibende Material gleichzeitig zum Schmieren der Schraube.

Gute Erfahrungen hat man mit diesem System bereits mit sogenannten Minen 7 für Polsterarbeiten gemacht. Das aus Metallblech gestanzte Plättchen ist mit zwei für die Endfunktion unwesentlichen Durchgangsbohrungen 8 versehen worden. In die Durchgangslöcher 8 der gestapelten Plättchen 7 wurde mit einer gewärmten Spritze fliessfähiges Wachs gespritzt, welches durch die Berührung mit dem kalten Metall sogleich erstarrt. Das mittlere Loch 9 dient zur Mitnahme des Steppfadens.

Die nach der oben beschriebenen Weise gestapelten Minen sind in Figur 4 dargestellt. Diese Minenstapel werden in Steppgeräte eingelegt und mit einem Stempel abgeschert und durch eine Hohlnadel durch das zu steppende Polster gestossen.

Die erforderliche Abscherkraft lässt sich auf verschiedene Arten beeinflussen. Die einfachste Art ist, die Grösse oder die Anzahl der zu füllenden Durchgangslöcher zu variieren. Die Wahl des Füllmaterials ist ein weiterer Parameter zum Erreichen der gewünschten Abscherkraft.

## Patentansprüche

1. Deckungsgleich gestapelte, flächige Kleinteile, dadurch gekennzeichnet, dass die Kleinteile (1, 4, 7) mindestens mit einem Durchgangsloch (2, 5, 8) versehen sind, welches mit einem elastischen Verbindungsmaterial (3) mit relativ geringem Scherkraftwiderstand gefüllt ist.

2. Kleinteile nach Anspruch 1, dadurch gekennzeichnet, dass das Durchgangsloch (2) mit einem Kunststoffstab gefüllt ist.

3. Kleinteile nach Anspruch 1, dadurch gekennzeichnet, dass als Durchgangsloch (2) ein für eine weitere Verwendung vorhandenes Loch verwendet wird.

4. Kleinteile nach Anspruch 1, dadurch gekennzeichnet, dass als Durchgangsloch (8) ein für eine spätere Funktion unbedeutendes Loch verwendet wird.

5. Kleinteile nach Anspruch 1, dadurch gekennzeichnet, dass mindestens zwei Durchgangslöcher (5, 8) mit Verbindungsmaterial gefüllt sind.

6. Kleinteile nach Anspruch 1, dadurch gekennzeichnet, dass als Verbindungsmaterial ein weicher Kunststoff verwendet wird.

7. Kleinteile nach Anspruch 1, dadurch gekennzeichnet, dass als Verbindungsmaterial ein Wachs oder wachsartiges Material verwendet wird.

## Claims

1. Small thin pieces in superposed form, characterized in that the small pieces (1, 4, 7) are provided with at least one passage hole (2, 5, 8) which is filled with an elastic connecting material (3) with relatively low shearing force resistance.

2. Small pieces according to Claim 1, characterized in that the passage hole (2) is filled with a synthetic material bar.

3. Small pieces according to Claim 1, characterized in that as passage hole (2) there is used a hole present for further use.

4. Small pieces according to Claim 1, characterized in that as passage hole (8) there is used a hole that is insignificant for the later functioning.

5. Small pieces according to Claim 1, characterized in that at least two passage holes (5, 8) are filled with connecting material.

6. Small pieces according to Claim 1, characterized in that as connecting material a soft synthetic material is used.

7. Small pieces according to Claim 1, characterized in that as connecting material there is used a wax or wax-like material.

## Revendications

1. Petites pièces minces empilées de façon coïncidante, caractérisées en ce que les petites pièces (1, 4, 7) sont munies d'au moins un trou de passage (2, 5, 8) qui est rempli d'une matière élastique de liaison (3) ayant une résistance au cisaillement relativement petite.

2. Petites pièces selon la revendication 1, caractérisées en ce que le trou de passage (2) est rempli d'une tige en matière synthétique.

3. Petites pièces selon la revendication 1, caractérisées en ce que, comme trou de passage (2), on utilise un trou existant pour une nouvelle utilisation.

4. Petites pièces selon la revendication 1, caractérisées en ce que, comme trou de passage (8), on utilise un trou sans importance pour une fonction ultérieure.

5. Petites pièces selon la revendication 1, caractérisées en ce qu'au moins deux trous de passage (5, 8) sont remplis de matière de liaison.

6. Petites pièces selon la revendication 1, caractérisées en ce que, comme matière de liaison, on utilise une matière synthétique molle.

7. Petites pièces selon la revendication 1, caractérisées en ce que, comme matière de liaison, on utilise une cire ou une matière cireuse.

3

1

**Fig.1**

2

5

4

6

**Fig.2**

9

7

8

8

8

**Fig.3**

**Fig.4**